(19) Europäisches Patentamt
European Patent Office
Office européen des brevets

(11) **EP 4 586 147 A1**

(12) **EUROPEAN PATENT APPLICATION**

(43) Date of publication:
**16.07.2025   Bulletin 2025/29**

(21) Application number: **24151754.9**

(22) Date of filing: **15.01.2024**

(51) International Patent Classification (IPC):
**G06N 3/084** (2023.01)        **G06N 3/0495** (2023.01)

(52) Cooperative Patent Classification (CPC):
**G06N 3/082; G06N 3/045; G06N 3/084**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **GM Cruise Holdings LLC
San Francisco CA 94103 (US)**

(72) Inventors:
• **MEYER, Michael
85521 Ottobrunn (DE)**
• **GUDELJ, Mato
85521 Ottobrunn (DE)**

(74) Representative: **Berkenbrink, Kai-Oliver et al
Patentanwälte Becker & Müller
Turmstrasse 22
40878 Ratingen (DE)**

(54) **METHOD TO REDUCE ACTIVATION MEMORY FOOTPRINT DURING MODEL TRAINING WITH SVD**

(57)    Technologies for reducing memory consumption during machine learning model training are described. A computing system configured to train a machine learning model comprises a processor and memory storing instructions that, when executed by a processor, cause the processor to perform certain acts. The acts comprise receiving at a layer of a machine learning model an uncompressed input intermediate feature function. The acts also comprise generating an uncompressed output intermediate feature function and compressing the uncompressed output intermediate feature function to generate a compressed output feature function and storing the compressed output intermediate feature function. Additionally, the acts comprise inputting the uncompressed output intermediate feature function as input into a subsequent layer of the machine learning model, discarding the uncompressed output feature function, and iteratively performing the method until a final output is generated.

FIG. 1

**Description**

BACKGROUND

Training machine learning models (e.g., neural networks and the like) requires expansive computing resources (graphical processing units (GPUs), memory, and the like). Often, training is performed in a facility comprising many GPUs, where several GPUs are used in order to expedite the training process. Training usually involves epochs and batches, which describe how data is introduced to a model. When using epochs, an entire data set is provided to the model all at once in one training cycle, whereas using batches involves introducing subsets of an epoch to the model in different training cycles. A gradient descent algorithm is then executed for a given batch of data.

When training with batches, an entire data set is divided into batches that are introduced into the model one by one using a training loop. Once all training batches have been processed, the epoch to which the batches belong has been completed. After training based upon one epoch is complete, training can continue using a next epoch in order to further refine the model.

The size of a batch is constrained by the memory available for training. The number of computations required during training is proportional to the size of the batch (or epoch), and also consumes large amounts of memory. The number of batches included in the epoch(s) determines how many iterations of the gradient descent are performed to refine the model. More iterations of the gradient descent improves the performance of the model at the cost of increased training time.

The overarching goal of training a model is to cause the trained model to provide an accurate classification of input data. In the case of image classification, this can involve identifying objects in an image. As training proceeds through the epochs, overall accuracy of the model improves. The relatively large amount of computer-readable memory needed to train machine learning models is problematic in many computing environments and applications, as an amount of computer-readable memory in such computing environments is finite.

SUMMARY

The following is a brief summary of subject matter that is described in greater detail herein. This summary is not intended to be limiting as to the scope of the claims.

Described herein are various technologies pertaining to a computer-implemented system that facilitates training a machine learning model. More specifically, the technologies described herein are directed towards a computer-implemented system that reduces memory consumption during training of a machine learning model.

When training a machine learning model such as a neural network, intermediate feature functions (e.g., matrices, tensors, etc.) can occupy a substantial amount of memory during forward propagation and backpropagation. For instance, training of a deep neural network (DNN) is often constrained by the availability of memory in a graphics processing unit (GPU) being used to train the network. In many instances, a relatively large amount of memory of the GPU is occupied by intermediate feature functions. These intermediate feature functions are created during forward propagation and are left in the GPU memory for use during backpropagation. In order to overcome this problem, the technologies described herein uses singular value decomposition (SVD) to compress and then discard an intermediate feature function after use during forward propagation, and then expand the compressed intermediate feature function when needed during backpropagation. While compressed, the intermediate feature function occupies less memory than its uncompressed counterpart.

In one embodiment, the described technologies perform SVD on intermediate feature functions as forward propagation progresses in order to generate a compressed intermediate feature function that comprises a lower rank approximation of the original uncompressed intermediate feature function. That is, once an original uncompressed intermediate feature function has been used during forward propagation, SVD is performed on the intermediate feature function to generate a set of matrices (i.e., $U_i$, $\Sigma_i$, and $V_i^*$ matrices) which are then compressed or truncated to generate a set of compressed, lower rank matrices ($\tilde{U}_i \tilde{\Sigma}_i \tilde{V}_i^*$) of the intermediate feature function, which require less memory for storage. Put another way, the lower-rank $\tilde{U}_i \tilde{\Sigma}_i \tilde{V}_i^*$ matrices together occupy less memory than the original intermediate feature function matrix (or tensor). Once used during forward propagation, the original uncompressed intermediate feature function is discarded so that the original intermediate feature function does not occupy memory unnecessarily, and the compressed intermediate feature function is stored instead. During backpropagation, the compressed intermediate feature function is expanded when needed, for instance, by multiplying together the $\tilde{U}_i \tilde{\Sigma}_i \tilde{V}_i^*$ matrices generated during decomposition to produce a lower rank approximation that is an accurate representation of the original intermediate feature function for a given layer of the network.

According to another embodiment, after calculation of an intermediate feature function, the intermediate feature function is approximated with a lower rank using SVD and truncation. This low rank approximation ($\tilde{U}_i \tilde{\Sigma}_i \tilde{V}_i^*$) replaces the original intermediate feature function in the compute graph for use during backpropagation. The approximation is left in the lower dimensional form and is expanded to its full dimensionality during backpropagation. Singular value decomposition with truncation produces three lower dimensional matrices ( $\tilde{U}\tilde{\Sigma}\tilde{V}^{*}$ ) that together occupy less memory than the original intermediate feature function. Multiplying the matrices $\tilde{U}\tilde{\Sigma}\tilde{V}^{*}$ together during backpropagation gives the low-rank reconstruction of the original intermediate feature function. The reconstruction is of the same size as the original intermediate feature function, and therefore is materialized when needed during backpropagation for a specific layer in the network. Forward propagation uses the original uncompressed (i.e., full rank) intermediate feature function, and SVD and truncation are performed after the uncompressed intermediate feature function is no longer needed for forward propagation.

The above summary presents a simplified summary in order to provide a basic understanding of some aspects of the systems and/or methods discussed herein. This summary is not an extensive overview of the systems and/or methods discussed herein. It is not intended to identify key/critical elements or to delineate the scope of such systems and/or methods. Its sole purpose is to present some concepts in a simplified form as a prelude to the more detailed description that is presented later.

BRIEF DESCRIPTION OF THE DRAWINGS

Fig. 1 illustrates a functional block diagram of a computing system that is configured to detect, identify, and track objects using a trained machine learning model.
Fig.2 illustrates a functional block diagram of a graphics processing unit (GPU) training system that is configured to train the machine learning model.
Fig. 3 illustrates a simplified example of the machine learning model.
Fig. 4 illustrates a schematic depicting forward propagation and backpropagation through a single layer $l_i$ of the machine learning model.
Fig. 5 illustrates a flow diagram of a methodology for training a machine learning model during forward propagation using reduced memory.
Fig. 6 illustrates a flow diagram of a methodology for training a machine learning model during back propagation using reduced memory.
Fig. 7 illustrates an exemplary AV, wherein the AV can navigate about roadways without human conduction.
Fig. 8 is a high-level illustration of an exemplary computing device.

DETAILED DESCRIPTION

Various technologies pertaining to reducing memory consumption during machine learning model training are now described with reference to the drawings, where like reference numerals are used to refer to like elements throughout. In the following description, for purposes of explanation, numerous specific details are set forth in order to provide a thorough understanding of one or more aspects. It may be evident, however, that such aspect(s) may be practiced without these specific details. In other instances, well-known structures and devices are shown in block diagram form in order to facilitate describing one or more aspects. Further, it is to be understood that functionality that is described as being carried out by certain system components may be performed by multiple components. Similarly, for instance, a component may be configured to perform functionality that is described as being carried out by multiple components.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Further, as used herein, the terms "component," "system," "module,", and "model" are intended to encompass computer-readable data storage that is configured with computer-executable instructions that cause certain functionality to be performed when executed by a processor. The computer-executable instructions may include a routine, a function, or the like. It is also to be understood that a component, system, module, or model may be localized on a single device or distributed across several devices.

Described herein are various technologies pertaining to reducing a memory footprint for intermediate feature functions (tensors, matrices, etc.) during training of a machine learning model such as a neural network or the like. The described technique approximates intermediate feature functions left in the compute graph with a low-rank approximation using SVD.

Conventionally, training of deep neural networks may be constrained by the availability of GPU memory. In many instances, a relatively large amount of the memory is occupied by intermediate feature functions (e.g., matrices, tensors, etc.). These intermediate feature functions are left in memory for use during backpropagation. The technologies described herein instead leave behind a low-rank approximation of the intermediate feature function, thereby reducing memory costs. The original intermediate feature function is still used during the forward propagation, thereby leaving unaffected the quality of the forward propagation. Conventional approaches to conserving memory during machine learning model training relate to decreasing a number of bits used to store information (e.g., from 32 to 8, etc.), which necessarily induces a substantial loss of information. The following description provides improvements to the conventional approaches.

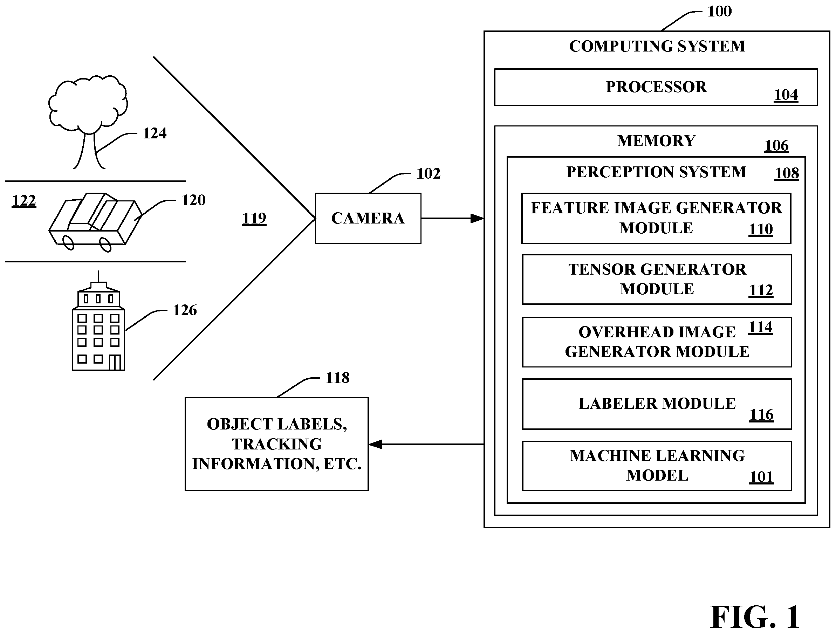

Referring now to Fig. 1, a functional block diagram of a computing system 100 that is configured to detect, identify, and track objects based upon images generated by sensors and using a trained machine learning model 101 is illustrated. The described machine learning model 101 is trained using a technique that conserves memory during training, thereby facilitating model training on smaller or less powerful GPUs when necessary. Additionally or alternatively, the improved memory usage efficiency can facilitate training machine learning models on larger data sets than previously possible when using a given GPU(s).

A sensor 102 (which can be a radar sensor, a lidar sensor, a camera, a sonar sensor, etc.) is in communication with the computing system 100, where the sensor 102 is configured to generate sensor data that is representative of objects in an environment of the sensor 102. In an example, the sensor 102 is mounted on a vehicle.

The computing system 100 includes a processor 104 and memory 106, where the memory 106 has loaded therein a computer-implemented perception system 108 that is executed by the processor 104. The processor 104 can be or include any suitable type of processor, such as a central processing unit (CPU), a graphics processing unit (GPU), a field programmable gate array (FPGA), an application-specific integrated circuit (ASIC), and so forth. The memory 106 can be or include random access memory (RAM), such as Static RAM (SRAM) and/or Dynamic RAM (DRAM). Additionally or alternatively, the memory 106 can be or include read only memory (ROM), such as Programmable ROM (PROM), Erasable Programmable ROM (EPROM), Electrically Erasable Programmable ROM (EEPROM), etc.

The perception system 108 is configured to detect, identify, and track objects in scenes captured in sensor data generated by the sensor 102. The perception system 108 optionally includes a feature generator module 110 that generates values of features in the sensor data generated by the sensor 102. With respect to radar, features can include x, y, and z coordinates, magnitude, Doppler, velocity, etc.

The perception system 108 further includes a labeler module 116 that detects, identifies, and/or tracks objects captured in sensor data generated by the sensor 102 based upon feature values computed by the feature generator module 110. The labeler module 116, then, outputs information 118, where such information 118 can be or include object labels, tracking information, and so forth. The labeler module 116 can be or include any suitable computer-implemented model or can be a portion thereof, including a deep neural network, a convolutional neural network, a recurrent neural network, etc. Also illustrated is a scene 119 that is captured by the sensor 102, including objects such as a vehicle 120 on a road 122, a tree 124, a building 126, etc.

The computing system 100 can be employed in a variety of environments and contexts. In an example, an autonomous vehicle (AV) includes the computing system 100, where the AV autonomously navigates roadways based upon the computing system 100 detecting, identifying, and tracking objects in the environment of the AV 100 (e.g., where the computing system 100 detects, identifies, and tracks objects based upon images generated by the camera 102). In another example, the computing system 100 can be included in a vehicle that comprises a driver assistance system, where the vehicle is not fully autonomous. In yet another example, the computing system 100 is included in an aerial vehicle, such as an airplane, a drone, etc. In still yet another example, the computing system 100 is included in a security system that is configured to detect, identify, and track potential threats to an item or region being secured by the security system. Other examples will be readily appreciated.

In contrast to conventional approaches, at least a portion of the perception system 108 is trained using a technique that employs singular value decomposition (SVD) and truncation to reduce the rank of intermediate feature functions (e.g., matrices, tensors, etc.) during training of the model. To address the issue of memory consumption during model training, the reduced-rank functions ($\tilde{U}_i, \tilde{V}_i, \tilde{\Sigma}_i^*$) are stored as a compressed version of the larger intermediate feature functions. Since the reduced-rank functions occupy less memory than their uncompressed counterparts, memory is conserved during model training, which allows for training using less powerful GPUs that have less memory relative to other more expensive GPUs. During the backpropagation training stage, the compressed intermediate feature functions are expanded as needed to provide an accurate approximation of the original uncompressed intermediate feature functions.

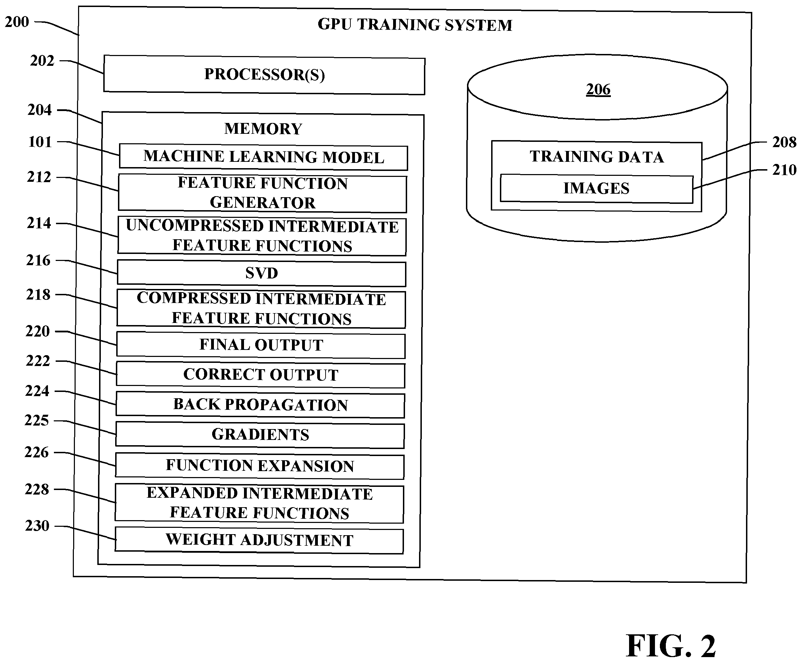

Referring now to Fig. 2, a functional block diagram of a graphics processing unit (GPU) training system 200 that is configured to train the perception system 108 using compressed intermediate feature functions during backpropagation is illustrated. The GPU training system 200 includes one or more processors 202 and memory 204, where the memory 204 has loaded therein a machine learning model 201 and instructions that are executed by the processor 202. The processor 202 can be or include any suitable type of processor, such as a central processing unit (CPU), a graphics processing unit (GPU), a field programmable gate array (FPGA), an application-specific integrated circuit (ASIC), and so forth. The memory 106 can be or include random access memory (RAM), such as Static RAM (SRAM) and/or Dynamic RAM (DRAM). Additionally or alternatively, the memory 204 can be or include read only memory (ROM), such as Programmable ROM (PROM), Erasable Programmable ROM (EPROM), Electrically Erasable Programmable ROM (EEPROM), etc.

The GPU training system 200 further comprises a data store 206 that stores training data 208 for training the machine learning model 201. In one embodiment, the training data includes images 210 that are used to train the machine learning model 201, e.g., to identify features in the images 210. The training data, however, can include values for features of any suitable sensor data that can be employed in connection with performing a classification task.

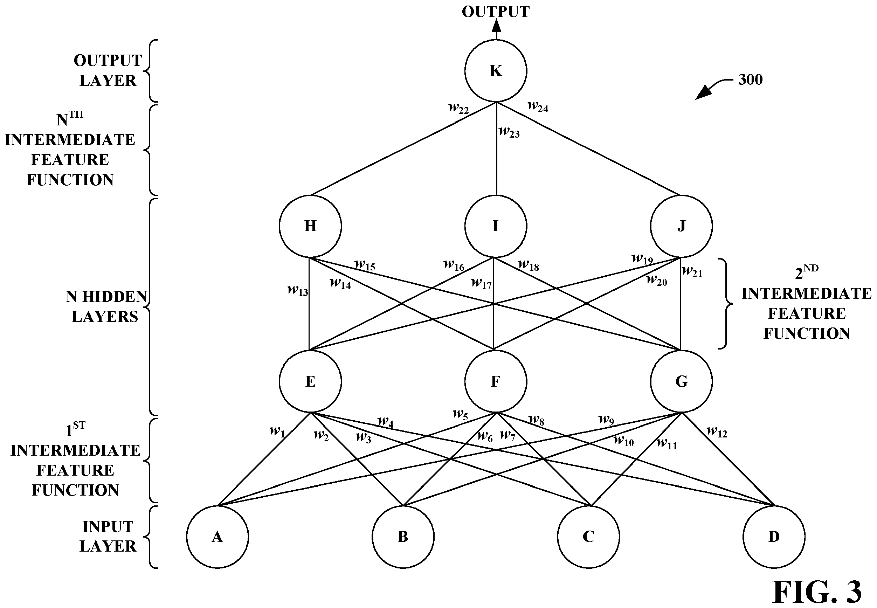

Turning briefly now to Fig. 3, a simplified example of a compute graph 300 for the machine learning model 201 is illustrated. The machine learning model 201 (also referred to herein as a neural network) can be trained using SVD to reduce a memory footprint during training. The compute graph 300 includes a plurality of nodes labeled A-K arranged in a plurality of layers. It will be understood that in practice such a machine learning model compute graph can include hundreds, thousands, millions, etc. of nodes, and that the illustrated machine learning model is presented by way of example only. Additionally, a machine learning model can include tens, hundreds, thousands, etc. of layers, and the illustrated example should not be construed in a limiting sense.

The compute graph 300 comprises an input layer including nodes A-D, which represent initial input values for the compute graph 300. Each input value A-D is provided to the nodes E-G of a first hidden layer in the compute graph 300. Although the compute graph 300 is depicted as having two hidden layers comprising nodes E-J for the sake of brevity, it is understood that the compute graph 300 may comprise any number N of hidden layers. Each input value A-D is multiplied by a respective weight $w_1$-$w_{12}$ to generate a first intermediate feature function (e.g., a matrix of values or the like). In the illustrated example, the first intermediate feature function can be represented as follows:

$$\begin{bmatrix} Aw_1 & Bw_2 & Cw_3 & Dw_4 \\ Aw_5 & Bw_6 & Cw_7 & Dw_8 \\ Aw_9 & Bw_{10} & Cw_{11} & Dw_{12} \end{bmatrix}$$

where the first row of the matrix comprises the input to node E (i.e., the outputs of nodes A-D weighted by respective values $w_1$-$w_4$), the second row of the matrix comprises the input to node F (i.e., the outputs of nodes A-D weighted by respective values $w_5$-$w_9$), and the third row of the matrix comprises the input to node G (i.e., the outputs of nodes A-D weighted by respective values $w_{10}$-$w_{13}$).

Output values from nodes E-G are multiplied by respective weights $w_{13}$-$w_{21}$ to generate a second intermediate feature function (e.g., a matrix of values or the like). In the illustrated example, the second intermediate feature function can be represented as follows:

$$\begin{bmatrix} Ew_{13} & Fw_{14} & Gw_{15} \\ Ew_{16} & Fw_{17} & Gw_{18} \\ Ew_{19} & Fw_{20} & Gw_{21} \end{bmatrix}$$

where the first row of the matrix comprises the input to node H (i.e., the outputs of nodes E-G weighted by respective values $w_{13}$-$w_{15}$), the second row of the matrix comprises the input to node I (i.e., the outputs of nodes E-G weighted by respective values $w_{16}$-$w_{18}$), and the third row of the matrix comprises the input to node J (i.e., the outputs of nodes E-G weighted by respective values $w_{19}$-$w_{21}$. Thus, the weighted output values of nodes E-G become the input values for the second hidden layer nodes H-J.

Output values from nodes H-J are multiplied by respective weights $w_{22}$-$w_{24}$ to generate an Nth intermediate feature function (e.g., a matrix of values or the like). In the illustrated example, the Nth intermediate feature function can be represented as follows:

$$\begin{bmatrix} Hw_{22} & Iw_{23} & Jw_{24} \end{bmatrix}$$

where the row of the matrix comprises the input to node K (i.e., the outputs of nodes H-J by respective values $w_{22}$-$w_{24}$). The output layer node K performs its function on the Nth intermediate feature function and outputs a final value. Although the compute graph 300 depicts a single output node K, more than one output node (with additional respective weight values) may be included in the output layer.

When training a machine learning model, intermediate feature functions can require a substantial amount of memory during forward propagation and backpropagation. In order to reduce memory required to store such functions, singular value decomposition can be performed on intermediate feature functions as forward propagation progresses in order to generate a compressed intermediate feature function that comprises a lower rank approximation of the original uncompressed intermediate feature function. The compressed intermediate feature function (i.e., the truncated versions ( $\tilde{U}_i \tilde{\Sigma}_i \tilde{V}_i^*$ ) of the $U_i$, $\Sigma_i$, and $V_i^*$ matrices generated during SVD) for a given layer is stored using substantially less memory space than its uncompressed counterpart until the intermediate feature function is needed again during back propagation, at which time the $\tilde{U}_i \tilde{\Sigma}_i \tilde{V}_i^*$ matrices generated during compression are multiplied together to produce a product that is an accurate representation of the original intermediate feature function for the layer.

Returning now to Fig. 2, the memory 204 further comprises a feature function generator 212 that generates uncompressed intermediate feature functions 214 during forward propagation when training the machine learning model 201 as described with regard to Fig. 3. The processor 202 executes a singular value decomposition (SVD) component 216 that generates a compressed intermediate feature function 218 (e.g., a reduced-rank approximation of an uncompressed given intermediate feature function) once the uncompressed intermediate feature function 214 has been acted upon by a given layer of the model 201. Once consumed by a subsequent layer of the machine learning model 201, the uncompressed intermediate feature function 214 can be discarded in favor of storing the compressed intermediate feature function 218, which requires less memory for storage than the uncompressed intermediate feature function 214. Once all intermediate feature functions have been acted upon and compressed, the machine learning model generates a final output 220.

In one embodiment, when performing singular value decomposition on the uncompressed intermediate feature functions, the SVD component 216 generates compressed intermediate feature functions by calculating matrices $U_i$, $\Sigma_i$, and $V_i^*$ (where the subscript $i$ denotes a given layer in the machine learning model) for each uncompressed intermediate feature function and then truncating $U_i$, $\Sigma_i$, and $V_i^*$ to form $\tilde{U}_i\tilde{\Sigma}_i\tilde{V}_i^*$. The compressed intermediate feature functions comprising the lower rank matrices $\tilde{U}_i\tilde{\Sigma}_i\tilde{V}_i^*$ are stored in place of the original uncompressed intermediate function. These lower rank matrices occupy less memory space than their respective uncompressed intermediate feature function and can be used during back propagation to expand the compressed intermediate feature function when needed.

During backpropagation, a "correct" output value 222 (i.e., the value at which the machine learning model 201 should have arrived) is provided to the model (e.g., backpropagation 224). As the model is traversed during backpropagation, at each layer, gradients 225 are calculated; to calculate the gradients 225, the compressed intermediate feature function 218 is expanded by an intermediate feature function expansion component 226 to generate an expanded intermediate feature function 228. For example, the compressed intermediate feature function can comprise the component matrices $\tilde{U}_i\tilde{\Sigma}_i\tilde{V}_i^*$ (where the subscript $i$ denotes a given layer in the machine learning model) derived during singular value decomposition and truncated by the SVD component 216. The component matrices are multiplied together to generate an accurate approximation of the original uncompressed intermediate feature function. The weights applied in the expanded intermediate feature function are adjusted using the calculated gradient(s) 225 by a weight adjustment component 230 to refine the forward output of the given layer so that during forward propagation the model 201 arrives at a final output that is closer to or equal to the "correct" final output value. Once all of the hidden layers in the machine learning model have been traversed during backpropagation, and the weights applied to the edges for each layer have been adjusted as needed, forward propagation is reiterated. The reiteration of forward propagation and backpropagation is continued until the machine learning model 201 generates sufficiently accurate output and/or until there is no more training data. The trained model can then be deployed in a desired environment.

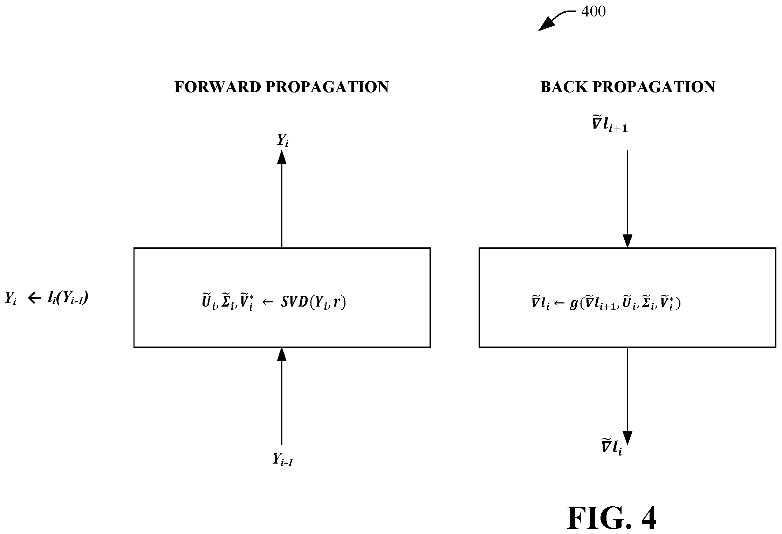

Fig. 4 illustrates a schematic 400 depicting forward propagation and backpropagation through a single layer $l_i$ of the machine learning model 201. During forward propagation, an uncompressed input intermediate feature function $Y_{i-1}$ to layer $l_i$ is converted by layer $l_i$ to an uncompressed output intermediate feature function $Y_i$, which is provided as input to a subsequent layer of the machine learning model. Once the uncompressed output intermediate feature function $Y_i$ has been generated, singular value decomposition (SVD) is performed on the output $Y_i$, which has a given rank $r$. The decomposition results in three matrices $U_i$, $\Sigma_i$, and $V_i^*$, which are then compressed (truncated) to generate matrices $\tilde{U}_i,\tilde{\Sigma}_i,\tilde{V}_i^*$, (where the tilde denotes that the matrix has been compressed) that have a lower rank k than the uncompressed intermediate feature function $Y_i$. In one embodiment, $\tilde{U}_i$ comprises a first k columns of the matrix $U_i$, $\tilde{\Sigma}_i$ comprises k values from $\Sigma_i$, and $\tilde{V}_i^*$ comprises a first k rows of $V_i^*$.

According to an example using matrices (although tensors are also considered as will be appreciated by one of skill in the art), $Y_i$ is an $m$ x $n$ matrix, $U$ is an $m$ x $m$ unitary matrix, $\Sigma$ is an $m$ x $n$ rectangular diagonal matrix, and $V$ is an $n$ x $n$ unitary matrix. $V^*$ is the conjugate transpose of $V$. These matrices are approximated by truncating rows and/or columns of the matrices as will be understood by one of ordinary skill in the art. (See, e.g., Roughgarden and Valiant, "CS186: The Modern Algorithmic Toolbox Lecture #9: The Singular Value Decomposition (SVD) and Low-Rank Matrix Approximations," May 2, 2023.) The approximated matrices are then stored as a "compressed" intermediate feature function ( $\tilde{U}_i\tilde{\Sigma}_i\tilde{V}_i^*$ ) instead of the larger uncompressed intermediate feature function and occupy less storage once they are approximated. During backpropagation, a layer gradient $\tilde{\nabla}$ for layer $l_{i+1}$ is applied to the intermediate feature function $Y_i$ that was output by layer $l_i$ during forward propagation. The compressed intermediate feature function for $Y$, is expanded by multiplying the component matrices $\tilde{U}_i\tilde{\Sigma}_i\tilde{V}_i^*$ to generate an accurate approximation of uncompressed $Y_i$. In this manner, a gradient $\tilde{\nabla}l_i$ is calculated, and the back propagation continues to layer $l_{i-1}$.

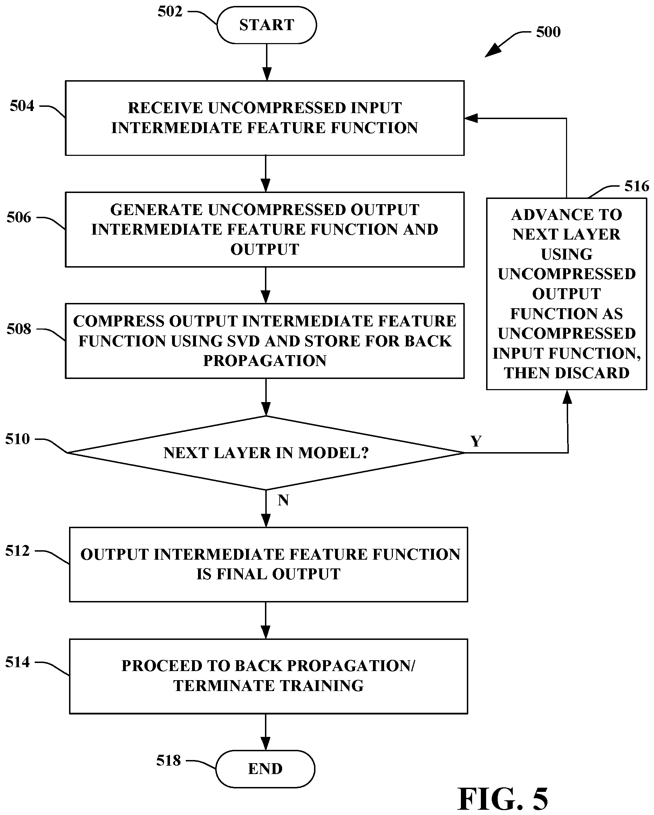

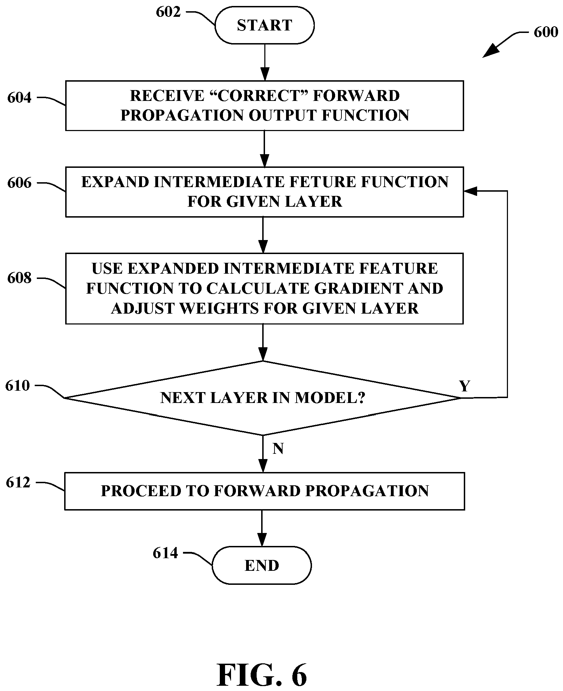

Figs. 5 and 6 illustrate methodologies relating to training a machine learning model (e.g., a neural network or the like) with improved memory utilization. While the methodologies are shown and described as being a series of acts that are performed in a sequence, it is to be understood and appreciated that the methodologies are not limited by the order of the sequence. For example, some acts can occur in a different order than what is described herein. In addition, an act can occur concurrently with another act. Further, in some instances, not all acts may be required to implement a methodology described herein.

Moreover, the acts described herein may be computer-executable instructions that can be implemented by one or more processors and/or stored on a computer-readable medium or media. The computer-executable instructions can include a routine, a subroutine, programs, a thread of execution, and/or the like. Still further, results of acts of the methodologies can be stored in a computer-readable medium, displayed on a display device, and/or the like.

With reference now solely to Fig. 5, a flow diagram 500 illustrating a methodology 500 for training a machine learning model during forward propagation using reduced memory is illustrated, where the methodology 500 is performed by a computing system. The methodology 500 starts at 502, and at 504 an uncompressed input intermediate feature function is received at a layer of a machine learning model. The feature function may be, e.g., a matrix, a tensor, etc. At 506, an uncompressed output intermediate feature function is generated and output. Generation of the uncompressed output intermediate feature function can include, e.g., performing an activation or the like on the uncompressed input intermediate feature function as the uncompressed input intermediate feature function is passed through the given layer of the machine learning model.

At 508, the output intermediate feature function is compressed using singular value decomposition and truncation, and stored for use during backpropagation. Singular value decomposition of the output intermediate feature function followed by truncation results in three reduced-rank matrices $\tilde{v}\tilde{v}\tilde{i}^{*}$ of lower rank than the original output intermediate feature function, and thus the compressed output intermediate feature function requires less memory for storage than the original output intermediate feature function.

At 510, a determination is made regarding whether there is a next layer in the machine learning model. If not, then at 512 the output intermediate feature function is considered the final output of the forward propagation. At 514, the method proceeds to backpropagation in order to refine the machine learning model.

If the determination at 510 indicates that there is a next layer in the model, then at 516 training advances to the next layer using the uncompressed output intermediate feature function generated at 506 as the input intermediate feature function received at 504, after which the uncompressed output intermediate feature function is discarded to conserve memory space. The method continues iteratively layer by layer until there are no subsequent layers left in the model for forward propagation. The methodology 500 terminates at 518.

Now referring to Fig. 6, a flow diagram illustrating a methodology 600 for training a machine learning model during backpropagation using reduced memory is illustrated, where the methodology 600 is performed by a computing system. The methodology 600 starts at 602, and at 604 a "correct" forward propagation output function is received for use during backpropagation. The correct forward propagation output function represents the value at which the machine learning model should have arrived after forward propagation. At 606, a compressed intermediate feature function for a given layer is expanded to generate an accurate approximation of the original uncompressed intermediate feature function associated with the given layer. Expansion of the compressed intermediate feature function can include multiplying together the lower rank matrices $\tilde{v}\tilde{v}\tilde{i}^{*}$ for a given layer $i$ generated using singular value decomposition and truncation during forward propagation.

At 608, the expanded intermediate feature function is used to calculate a backpropagation gradient, which is used to adjust weights associated with the given layer $i$. At 610, a determination is made regarding whether there is a next layer $i$-$1$ in the model. If there is no next layer in the model, then at 612, backpropagation concludes, and the method can proceed to forward propagation as described with regard to Fig. 4. If there is a next layer in the model as determined at 610, then the method reverts to 606 for expansion of the compressed intermediate feature function for the next layer. Acts 606, 608, and 610 are iteratively performed until all layers in the model have been traversed during back propagation. The methodology completes at 614.

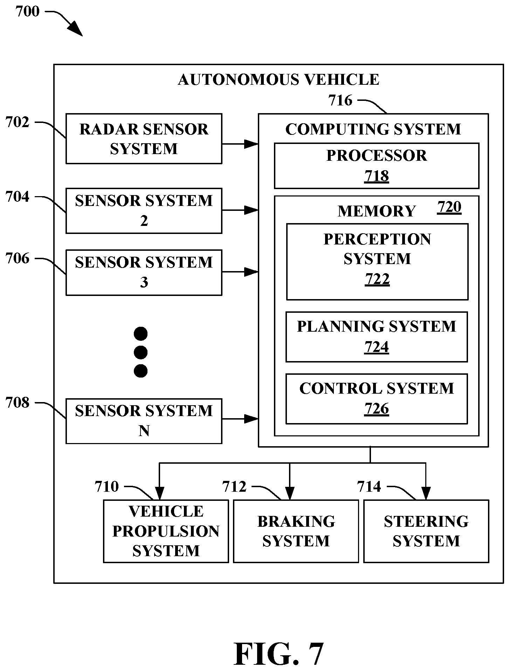

Various technologies described herein are suitable for use in connection with an autonomous vehicle (AV) that employs a sensor system (e.g., camera, radar, lidar, sonar, etc.) to facilitate navigation about roadways. Referring now to Fig. 7, an exemplary AV 700 is illustrated, wherein the AV 700 can navigate about roadways without human conduction based upon sensor signals output by sensor systems of the AV 700. The AV 700 includes a plurality of sensor systems 702-708 (a first sensor system 702 through an Nth sensor system 708). The sensor systems 702-708 may be of different types. For example, the first sensor system 702 is a radar sensor system, the second sensor system 704 may be a lidar sensor system, the third sensor system 706 may be a camera (image) system, and the Nth sensor system 708 may be a sonar system. Other exemplary sensor systems include GPS sensor systems, inertial sensor systems, infrared sensor systems, and the like. It will be understood that the herein-described techniques, methods, systems, etc., can be employed in conjunction with any suitable kinds of sensor system(s). The various sensor systems 702-708 are arranged about the AV 700. The sensor systems 702-708 are configured to repeatedly (e.g., continuously, or periodically) output sensor data that is representative of objects and conditions in the driving environment of the AV 700.

The AV 700 further includes several mechanical systems that are used to effectuate appropriate motion of the AV 700. For instance, the mechanical systems can include but are not limited to, a vehicle propulsion system 710, a braking system 712, and a steering system 714. The vehicle propulsion system 710 may be an electric engine, an internal combustion engine, or a combination thereof. The braking system 712 can include an engine brake, brake pads, actuators, a regenerative braking system, and/or any other suitable componentry that is configured to assist in decelerating the AV 700. The steering system 714 includes suitable componentry that is configured to control the direction of movement of the AV 700.

The AV 700 additionally comprises a computing system 716 that is in communication with the sensor systems 702-708 and is further in communication with the vehicle propulsion system 710, the braking system 712, and the steering system 714. The computing system 716 includes a processor 718 and memory 720 that includes computer-executable instructions that are executed by the processor 718. In an example, the processor 718 can be or include a graphics processing unit (GPU), a plurality of GPUs, a central processing unit (CPU), a plurality of CPUs, an application-specific integrated circuit (ASIC), a microcontroller, a programmable logic controller (PLC), a field programmable gate array (FPGA), or the like.

The memory 720 comprises a perception system 722, a planning system 724, and a control system 726. Briefly, the perception system 722 is configured to identify the presence of objects and/or characteristics of objects in the driving environment of the AV 700 based upon sensor data output by the sensor systems 702-708. The planning system 724 is configured to plan a route and/or a maneuver of the AV 700 based upon data pertaining to objects in the driving environment that are output by the perception system 722. The control system 726 is configured to control the mechanical systems 712-714 of the AV 700 to effectuate appropriate motion to cause the AV 700 to execute a maneuver planned by the planning system 724.

The perception system 722 is configured to identify objects in proximity to the AV 700 that are captured in sensor signals output by the sensor systems 702-708. By way of example, the perception system 722 can be configured to identify the presence of an object in the driving environment of the AV 700 based upon images generated by a camera system included in the sensor systems 704-708. In another example, the perception system 722 can be configured to determine a presence and position of an object based upon radar data output by the radar sensor system 702.

In one embodiment, the perception system 722 is similar or identical to the perception system 108 of Fig. 1 and includes the components, modules, etc., thereof to provide the herein-described functionality. For instance, the perception system 722 can include the machine learning model 101 (Figs. 1-4). In another embodiment, the computing system 716 comprises one or more components of the GPU training system 200 (Fig. 2). Because the described training technique uses less memory than conventional training techniques, the GPU training system 200 can be installed in an AV using a smaller or lower-powered GPU to continuously or periodically update the machine learning model 101 based on data collected during operation of the vehicle. In yet another embodiment, the machine learning model 101 is trained onboard the AV.

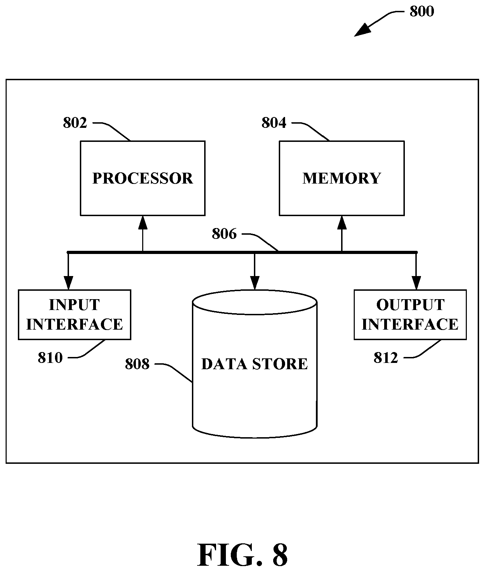

Referring now to Fig. 8, a high-level illustration of an exemplary computing device 800 that can be used in accordance with the systems and methodologies disclosed herein is illustrated. For instance, the computing device 800 may be or include the computing system 716. The computing device 800 includes at least one processor 802 that executes instructions that are stored in a memory 804. The instructions may be, for instance, instructions for implementing functionality described as being carried out by one or more modules, components, or systems discussed above or instructions for implementing one or more of the methods described above. The processor 802 may be a GPU, a plurality of GPUs, a CPU, a plurality of CPUs, a multi-core processor, a combination of the foregoing, etc. The processor 802 may access the memory 804 by way of a system bus 806. In addition to storing executable instructions, the memory 804 may also store camera data, lidar data, radar data, beamformed radar data, sonar data, neural network configurations, etc.

The computing device 800 additionally includes a data store 808 that is accessible by the processor 802 by way of the system bus 806. The data store 808 may include executable instructions, camera data, radar data, beamformed radar data, lidar data, sonar data, embeddings of these data in latent spaces, etc. The computing device 800 also includes an input interface 810 that allows external devices to communicate with the computing device 800. For instance, the input interface 810 may be used to receive instructions from an external computing device, etc. The computing device 800 also includes an output interface 812 that interfaces the computing device 800 with one or more external devices. For example, the computing device 800 may transmit control signals to the vehicle propulsion system 710, the braking system 712, and/or the steering system 714 by way of the output interface 812.

Additionally, while illustrated as a single system, it is to be understood that the computing device 800 may be a distributed system. Thus, for instance, several devices may be in communication by way of a network connection and may collectively perform tasks described as being performed by the computing device 800.

Various functions described herein can be implemented in hardware, software, or any combination thereof. If implemented in software, the functions can be stored on or transmitted over as one or more instructions or code on a computer-readable medium. Computer-readable media includes computer-readable storage media. A computer-readable storage media can be any available storage media that can be accessed by a computer. By way of example, and not limitation, such computer-readable storage media can comprise RAM, ROM, EEPROM, CD-ROM or other optical disk storage, magnetic disk storage or other magnetic storage devices, or any other medium that can be used to store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include FPGAs, ASICs, Application-specific Standard Products (ASSPs), SOCs, Complex Programmable Logic Devices (CPLDs), etc.

Described herein are various technologies according to at least the following examples.

(A1) In an aspect, a computing system configured to train a machine learning model includes a processor and memory storing instructions that, when executed by the processor, cause the processor to perform certain acts. The acts include receiving at a layer of a machine learning model an uncompressed input intermediate feature function. The acts further include generating an uncompressed output intermediate feature function. The acts also include compressing the uncompressed output intermediate feature function to generate a compressed output intermediate feature function. Additionally, the acts include storing the compressed output intermediate feature function. The acts also include inputting the uncompressed output intermediate feature function as input into a subsequent layer of the machine learning model. The acts further include discarding the uncompressed output intermediate feature function. Moreover, the acts include iteratively performing the method until a final output is generated.

(A2) In some embodiments of the computing system of (A1), compressing the uncompressed output intermediate feature function further includes executing a singular value decomposition (SVD) on the uncompressed output intermediate feature function to generate matrices $U_i$, $\Sigma_i$, and $V_i^*$.

(A3) In some embodiments of the computing system of (A2), the acts further include truncating matrices $U_i$, $\Sigma_i$, and $V_i^*$ to generate and store reduced-rank matrices $\tilde{U}_i \tilde{U}_i \tilde{U}_i^*$, which describe the uncompressed output intermediate feature function and occupy less memory than the uncompressed output intermediate feature function.

(A4) In some embodiments of the computing system of (A3), the acts further include, during backpropagation for a given layer, expanding the compressed output intermediate feature function by multiplying together the $\tilde{U}_i \tilde{U}_i \tilde{U}_i^*$ matrices to generate an approximation of the uncompressed output intermediate feature function.

(A5) In some embodiments of the computing system of (A4), the approximation of the uncompressed output intermediate feature function has a lower rank than the uncompressed output intermediate feature function.

(A6) In some embodiments of the computing system of at least one of (A4)-(A5), the acts further include adjusting feature function weights for the given layer based on the approximation of the uncompressed output intermediate feature function during back propagation.

(A7) In some embodiments of the computing system of at least one of (A1)-(A6), the computing system is employed in an autonomous vehicle.

(B 1) In another aspect, a method performed by a computing system for training a machine learning model includes receiving at a layer of a machine learning model an uncompressed input intermediate feature function. The method further includes generating an uncompressed output intermediate feature function. The method also includes compressing the uncompressed output intermediate feature function to generate a compressed output intermediate feature function. Additionally the method includes storing the compressed output intermediate feature function. The method also includes inputting the uncompressed output intermediate feature function as input into a subsequent layer of the machine learning model. The method further includes discarding the uncompressed output intermediate feature function. The method further includes iteratively performing the method until a final output is generated.

(B2) In some embodiments of the method of (B 1), the method further includes compressing the uncompressed output intermediate feature function further comprises executing a single value decomposition (SVD) on the uncompressed output intermediate feature function to generate matrices $U_i$, $\Sigma_i$, and $V_i^*$.

9

(B3) In some embodiments of the method of (B2), the method further includes truncating matrices $U_i$, $\Sigma_i$, and $V_i^*$ to generate and store lower-rank matrices $\tilde{U}_i, \tilde{\Sigma}_i, \tilde{V}_i^*$, which describe the uncompressed output intermediate feature function and occupy less memory than the uncompressed output intermediate feature function.

(B4) In some embodiments of the method of (B3), the method further includes, during back propagation, for a given layer, expanding the compressed output intermediate feature function by multiplying together the $\tilde{U}_i, \tilde{\Sigma}_i, \tilde{V}_i^*$ matrices to generate an approximation of the uncompressed output intermediate feature function.

(B5) In some embodiments of the method of (B4), the approximation of the uncompressed output intermediate feature function has a lower rank than the uncompressed output intermediate feature function.

(B6) In some embodiments of the method of at least one of (B4)-(B5), the method further includes adjusting feature function weights for the given layer based on the approximation of the uncompressed output intermediate feature function during back propagation.

(B7) In some embodiments of the method of at least one of (B 1)-(B6), the method is employed in an autonomous vehicle.

(C1) In another aspect, a computing system is configured to perform at least one of the methods disclosed herein (e.g., any of the methods of (B 1)-(B7).

(D1) In yet another aspect, a computer-readable storage medium includes instructions that, when executed by a processor, cause the processor to perform at least one of the methods disclosed herein (e.g., any of the methods of (B1)-(B7).

(E1) In another aspect, a computer-readable storage medium includes instructions that, when executed by a processor, cause the processor to perform certain acts. The acts include receiving at a layer of a machine learning model an uncompressed input intermediate feature function. The acts also include generating an uncompressed output intermediate feature function. The acts further include compressing the uncompressed output intermediate feature function to generate a compressed output intermediate feature function. Additionally, the acts include storing the compressed output intermediate feature function. The acts furthermore include inputting the uncompressed output intermediate feature function as input into a subsequent layer of the machine learning model. The acts also include discarding the uncompressed output intermediate feature function. The acts further include iteratively performing the method until a final output is generated.

(E2) In some embodiments of the computer-readable storage medium of (E1), compressing the uncompressed output intermediate feature function further comprises executing a singular value decomposition (SVD) on the uncompressed output intermediate feature function to generate matrices $U_i$, $\Sigma_i$, and $V_i^*$.

(E3) In some embodiments of the computer-readable storage medium of (E2) the acts further include truncating matrices $U_i$, $\Sigma_i$, and $V_i^*$ to generate and store lower-rank matrices $\tilde{U}_i, \tilde{\Sigma}_i, \tilde{V}_i^*$, which describe the uncompressed output intermediate feature function and occupy less memory than the uncompressed output intermediate feature function.

(E4) In some embodiments of the computer-readable storage medium of (E3) the acts further include, during back propagation, for a given layer, expanding the compressed output intermediate feature function by multiplying together the $\tilde{U}_i, \tilde{\Sigma}_i, \tilde{V}_i^*$ matrices to generate an approximation of the uncompressed output intermediate feature function.

(E5) In some embodiments of the computer-readable storage medium of (E4), the approximation of the uncompressed output intermediate feature function has a lower rank than the uncompressed output intermediate feature function.

(E6) In some embodiments of the computer-readable storage medium of at least one of claim (E4)-(E5), the acts further comprising adjusting feature function weights for the given layer based on the approximation of the uncompressed output intermediate feature function during back propagation.

What has been described above includes examples of one or more embodiments. It is, of course, not possible to describe every conceivable modification and alteration of the above devices or methodologies for purposes of describing the aforementioned aspects, but one of ordinary skill in the art can recognize that many further modifications and permutations of various aspects are possible. Accordingly, the described aspects are intended to embrace all such alterations, modifications, and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

**Claims**

1. A computing system configured to train a machine learning model, comprising:

   a processor; and
   memory storing instructions that, when executed by a processor, cause the processor to perform acts comprising:

      receiving at a layer of a machine learning model an uncompressed input intermediate feature function;
      generating an uncompressed output intermediate feature function;

compressing the uncompressed output intermediate feature function to generate a compressed output intermediate feature function;

storing the compressed output intermediate feature function;

inputting the uncompressed output intermediate feature function as input into a subsequent layer of the machine learning model;

discarding the uncompressed output intermediate feature function; and

iteratively performing the method until a final output is generated.

2. The computing system of claim 1, wherein compressing the uncompressed output intermediate feature function further comprises executing a singular value decomposition (SVD) on the uncompressed output intermediate feature function to generate matrices $U_i$, $\Sigma_i$, and $V_i^*$.

3. The computing system of claim 2, the acts further comprising truncating matrices $U_i$, $\Sigma_i$, and $V_i^*$ to generate and store reduced-rank matrices $\tilde{U}_i\tilde{\Sigma}_i\tilde{V}_i^*$, which describe the uncompressed output intermediate feature function and occupy less memory than the uncompressed output intermediate feature function.

4. The computing system of claim 3, the acts further comprising, during backpropagation for a given layer, expanding the compressed output intermediate feature function by multiplying together the $\tilde{U}_i\tilde{\Sigma}_i\tilde{V}_i^*$ matrices to generate an approximation of the uncompressed output intermediate feature function.

5. The computing system of claim 4, wherein the approximation of the uncompressed output intermediate feature function has a lower rank than the uncompressed output intermediate feature function.

6. The computing system of at least one of claims 4-5, the acts further comprising adjusting feature function weights for the given layer based on the approximation of the uncompressed output intermediate feature function during back propagation.

7. The computing system of at least one of claims 1-6, employed in an autonomous vehicle.

8. A method performed by a computing system for training a machine learning model, the method comprising:

receiving at a layer of a machine learning model an uncompressed input intermediate feature function;

generating an uncompressed output intermediate feature function;

compressing the uncompressed output intermediate feature function to generate a compressed output intermediate feature function;

storing the compressed output intermediate feature function;

inputting the uncompressed output intermediate feature function as input into a subsequent layer of the machine learning model;

discarding the uncompressed output intermediate feature function; and

iteratively performing the method until a final output is generated.

9. The method of claim 8, wherein compressing the uncompressed output intermediate feature function further comprises executing a single value decomposition (SVD) on the uncompressed output intermediate feature function to generate matrices $U_i$, $\Sigma_i$, and $V_i^*$.

10. The method of claim 9, further comprising truncating matrices $U_i$, $\Sigma_i$, and $V_i^*$ to generate and store lower-rank matrices $\tilde{U}_i\tilde{\Sigma}_i\tilde{V}_i^*$, which describe the uncompressed output intermediate feature function and occupy less memory than the uncompressed output intermediate feature function.

11. The method of claim 10, further comprising, during back propagation, for a given layer, expanding the compressed output intermediate feature function by multiplying together the $\tilde{U}_i\tilde{\Sigma}_i\tilde{V}_i^*$ matrices to generate an approximation of the uncompressed output intermediate feature function.

12. The method of claim 11, wherein the approximation of the uncompressed output intermediate feature function has a lower rank than the uncompressed output intermediate feature function.

13. The method of at least one of claims 11-12, further comprising adjusting feature function weights for the given layer based on the approximation of the uncompressed output intermediate feature function during back propagation.

14. The method of at least one of claims 8-13, employed in an autonomous vehicle.

**FIG. 1**

GPU TRAINING SYSTEM

200

202 — PROCESSOR(S)

206

204 — MEMORY

101 — MACHINE LEARNING MODEL

212 — FEATURE FUNCTION GENERATOR

214 — UNCOMPRESSED INTERMEDIATE FEATURE FUNCTIONS

216 — SVD

218 — COMPRESSED INTERMEDIATE FEATURE FUNCTIONS

220 — FINAL OUTPUT

222 — CORRECT OUTPUT

224 — BACK PROPAGATION

225 — GRADIENTS

226 — FUNCTION EXPANSION

228 — EXPANDED INTERMEDIATE FEATURE FUNCTIONS

230 — WEIGHT ADJUSTMENT

TRAINING DATA — 208

IMAGES — 210

EP 4 586 147 A1

13

FIG. 2

EP 4 586 147 A1

OUTPUT

OUTPUT
LAYER

K

300

$N^{TH}$
INTERMEDIATE
FEATURE
FUNCTION

$w_{22}$   $w_{24}$

$w_{23}$

H          I          J

N HIDDEN
LAYERS

$w_{15}$   $w_{16}$   $w_{18}$   $w_{19}$   $w_{21}$

$w_{13}$   $w_{14}$   $w_{17}$   $w_{20}$

$2^{ND}$
INTERMEDIATE
FEATURE
FUNCTION

E          F          G

$1^{ST}$
INTERMEDIATE
FEATURE
FUNCTION

$w_4$   $w_5$   $w_8$   $w_9$

$w_1$   $w_2$   $w_3$   $w_6$   $w_7$   $w_{10}$   $w_{11}$   $w_{12}$

INPUT
LAYER

A          B          C          D

FIG. 3

EP 4 586 147 A1

— 400

**FORWARD PROPAGATION**

**BACK PROPAGATION**

$\widetilde{\nabla}l_{i+1}$

$Y_i$

$$\widetilde{U}_i, \widetilde{\Sigma}_i, \widetilde{V}_i^* \leftarrow SVD(Y_i, r)$$

$Y_i \leftarrow l_i(Y_{i-1})$

$$\widetilde{\nabla}l_i \leftarrow g(\widetilde{\nabla}l_{i+1}, \widetilde{U}_i, \widetilde{\Sigma}_i, \widetilde{V}_i^*)$$

$Y_{i-1}$

$\widetilde{\nabla}l_i$

# FIG. 4

**FIG. 5**

602 — START

600

604 — RECEIVE "CORRECT" FORWARD PROPAGATION OUTPUT FUNCTION

606 — EXPAND INTERMEDIATE FETURE FUNCTION FOR GIVEN LAYER

608 — USE EXPANDED INTERMEDIATE FEATURE FUNCTION TO CALCULATE GRADIENT AND ADJUST WEIGHTS FOR GIVEN LAYER

610 — NEXT LAYER IN MODEL?   Y

N

612 — PROCEED TO FORWARD PROPAGATION

614 — END

# FIG. 6

700

**AUTONOMOUS VEHICLE**

716

702 — **RADAR SENSOR SYSTEM**

704 — **SENSOR SYSTEM 2**

706 — **SENSOR SYSTEM 3**

● ● ●

708 — **SENSOR SYSTEM N**

**COMPUTING SYSTEM**

**PROCESSOR 718**

**MEMORY 720**

**PERCEPTION SYSTEM 722**

**PLANNING SYSTEM 724**

**CONTROL SYSTEM 726**

710 — **VEHICLE PROPULSION SYSTEM**

712 — **BRAKING SYSTEM**

714 — **STEERING SYSTEM**

**FIG. 7**

*800*

**FIG. 8**

Europäisches
Patentamt

European
Patent Office

Office européen
des brevets

# EUROPEAN SEARCH REPORT

**Application Number**

EP 24 15 1754

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/051103 A1 (RHODES ANTHONY DANIEL [US]) 17 February 2022 (2022-02-17) * paragraphs [0003] - [0078] * ----- | 1-14 | INV. G06N3/084 G06N3/0495 |
| A | US 2022/207375 A1 (BYUN SEOK-YONG [KR] ET AL) 30 June 2022 (2022-06-30) * paragraphs [0002] - [0051] * ----- | 1-14 | |
| A | SHUVO MD MARUF HOSSAIN ET AL: "Efficient Acceleration of Deep Learning Inference on Resource-Constrained Edge Devices: A Review", PROCEEDINGS OF THE IEEE, IEEE. NEW YORK, US, vol. 111, no. 1, 2 January 2023 (2023-01-02), pages 42-91, XP011931660, ISSN: 0018-9219, DOI: 10.1109/JPROC.2022.3226481 [retrieved on 2022-12-14] * the whole document * ----- | 1-14 | |

**TECHNICAL FIELDS SEARCHED (IPC)**

G06N

The present search report has been drawn up for all claims

| Place of search | Date of completion of the search | Examiner |
|---|---|---|
| The Hague | 12 July 2024 | Moran, Matthew |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**

EP 24 15 1754

This annex lists the patent family members relating to the patent documents cited in the above-mentioned European search report.
The members are as contained in the European Patent Office EDP file on
The European Patent Office is in no way liable for these particulars which are merely given for the purpose of information.

12-07-2024

| Patent document cited in search report | Publication date | Patent family member(s) | | Publication date |
|---|---|---|---|---|
| US 2022051103 A1 | 17-02-2022 | CN | 116050501 A | 02-05-2023 |
| | | US | 2022051103 A1 | 17-02-2022 |
| US 2022207375 A1 | 30-06-2022 | US | 2019087729 A1 | 21-03-2019 |
| | | US | 2022207375 A1 | 30-06-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ROUGHGARDEN** ; **VALIANT**. *CS186: The Modern Algorithmic Toolbox Lecture #9: The Singular Value Decomposition (SVD) and Low-Rank Matrix Approximations*, 02 May 2023